# EUROPEAN PATENT SPECIFICATION

(11) **EP 3 767 882 B1**
(45) Date of publication and mention of the grant of the patent: **01.11.2023**
(21) Application number: 19186622.7
(22) Date of filing: 16.07.2019
(51) Int. Cl.: H04L 41/14, H04L 43/04, H04L 43/106, H04L 43/12

(54) **NETWORK TRAFFIC MONITORING DEVICE**
NETZWERKVERKEHRÜBERWACHUNGSVORRICHTUNG
DISPOSITIF DE SURVEILLANCE DE TRAFIC DE RÉSEAU

(43) Date of publication of application: 20.01.2021
(73) Proprietor: Profitap HQ B.V., 5656 AE Eindhoven (NL)
(72) Inventor: Schirck, Laurent, 5656 AE Eindhoven (NL)
(74) Representative: De Vries & Metman

(56) References cited:
- EP-A1- 3 454 507
- US-A1- 2011 211 593
- US-A1- 2014 195 330

## Description

### FIELD OF THE INVENTION

This disclosure relates to a network tap, in particular to such tap that comprises an analysis component and a network traffic capture component.

### BACKGROUND

EP3454507A1 discloses a network tap as a hardware device which takes a copy the network traffic / frames and provides them to a monitoring device. The network tap has at least three ports: a first network port for connecting a first network device, a second network port for connecting a second network device and a third network port for connecting a monitoring device. The tap is inserted between the first network device and the second network device and allows all traffic to pass through it unimpeded in real-time, but further copies this traffic to the third network port, enabling the monitoring device to monitor this traffic. A network tap is preferably passive in the meaning of having the lowest impact on the monitored network devices. The network tap should not cause connection outage or cause performance (e.g. bit error rate) degradation. Network taps are commonly used for networking intrusion detection and network probes, amongst others.

US 2011/021 1593 A1 discloses a method of capturing packets and packet receivers to capture packets. A plurality of packets may be received form a network. A timestamp may be attached to each received packet. The timestamped received packet may be distributed among a pluarlity of capture engines. Each of the plurality of capture engines may store, in a respective capture memory of a plurality of capture memories, at least some timestamped received packets determined to match one or more of a plurality of predetermined capture criteria. A list in timestamp order of contiguous packets stored in the plurality of capture memories may be prepared.

US 2014/0195330 A1 discloses an apparatus that includes a collection agent, an aggregation module, an analysis module, and a presentation module. The collection agent is operatively coupled to a data storage and is configured to (1)incrementally collect data associated with a presentation of media on a display of an electronic device, and (2) send a set of signals to store the incrementally collected data in the data storage. The aggregation module is configured to receive at least a portion of the incrementally collected data to define an aggregated data set. The analysis module is configured to analyze the aggregated data set to determine an effectiveness score associated with the presentation of the media. The presentation module is configured to (1) receive a signal associated with the effectiveness score, and (2) send a signal to an electronic device such that information associated with the effectiveness score is displayed on a display of the electronic device.

EP 3 454 507 A1 a network tap comprising a first network connector, a second network connector, a third network connector for connecting to a monitoring device, a phase locked loop, and circuitry. The circuitry is configured to extract a clock signal from a first signal on an output of one of the first and second network connectors, provide the clock signal to the phase locked loop, receive a reference clock signal derived from the recovered clock signal from the phase locked loop and clock a second signal on the input of the other one of the first and second network connectors using the received reference clock signal if a link has been established between a first network device and the first network connector and a link has been established between a second network device and the second network connector.

It is an object of the present disclosure to provide an improved network tap.

### SUMMARY

Therefore, in one aspect, this disclosure relates to a network tap according to claim 1. The network tap comprises an analysis component for analyzing one or more data packets. Further, the network tap comprises a network traffic capture component comprising a first network connector for receiving a first signal from a first network device. An example of such a first network device is a network switch, which may be the case if the network tap is used in a span in configuration. At least part of the first signal represents a first data packet. The network tap comprises hardware implemented logic, such as one or more field programmable gate arrays (FPGAs), configured to determine the first data packet based on the received first signal and provide the determined first data packet to the analysis component. The network tap further comprises a second network connector for receiving a second signal from a second network device. In an example, the traffic monitoring device is used in line, which means that it is inserted between two network devices in order monitor the traffic between them. At least part of the second signal represents a second data packet. In this embodiment, the hardware implemented logic is configured to determine a second data packet based on the second signal received by the second network connector from the second network device and to provide the determined second data packet to the analysis component. Further, the hardware implemented logic is configured to provide the determined first data packet to the second network connector and to provide the determined second data packet to the first network connector. The first network connector is configured to transmit the second data packet to the first network device and the second network connector is configured to transmit the first data packet to the second network device.

The network tap, in particular its hardware implemented logic, is understood to capture the traffic between the first network device and second network device. The hardware implemented logic provides a data packet copy to the analysis component and one copy to the other network connector.

The applicant has realized that the function of copying the data packets is preferably not performed by a processor, such as a central processing unit, that executes a computer program. If a malicious party has succeeded in installing a malicious computer program, then this copy function may have been compromised. In an example, a malicious computer program may cause such processor to alter data packets that are for example received on the first network connector from the first network device and then provide these altered data packets to the second network connector from where the altered data packets are transmitted to the second network device. In such case, the traffic between first and second network device would be compromised.

However, hardware implemented logic does not perform its function based on a computer program that may have been corrupted by a malicious party. Therefore, the disclosed network tap does not allow for a malicious party to insert traffic into the network of which the first and second network device are part.

Further, advantageously, the network tap comprises the analysis component so that the captured data packets can be analyzed at the network tap. This obviates the need to transmit all captured data packets to an external device for analyses and thus reduces consumed network resources, such as bandwidth.

The analysis component may at least partially be implemented in hardware and/or at least partially in software.

The signals received from the first and second network device may be electrical signals, for example transmitted over a conductive wire. These signals may also be optical signals, for example transmitted through an optical fiber cable.

Determining a data packet within a signal may be understood to comprise determining a plurality of bit values based on the signal and determining which of the determined bit values represent the data packet. The hardware implemented logic may for example be configured to determine, based on a plurality of received bit values, which bit value is the first bit of a data packet and which bit value is the last bit of a data packet.

In an embodiment, the analysis component comprises one or more computer readable storage media for storing computer readable instructions. In this embodiment, the analysis component further comprises a processor, preferably a microprocessor, coupled to the one or more computer readable storage media. The computer readable instructions, when executed by the processor, cause the processor to store the first data packet and, optionally the second data packet, in the one or more computer readable storage media for analysis.

The analysis component of the network tap comprises a processor and can thus be used to perform a wide variety of analyses on the captured data packets. The computer readable storage media may have stored any kind of computer program comprising instructions that may cause the processor to perform any type of analyses on captured packets.

In an embodiment, the network tap comprises an output coupled to the analysis component. The output is configured to transmit signals representing information stored in the one or more computer readable storage media to an external device. This embodiment allows to communicate a selection of captured data packets to an external device, for example for further analyses. Additionally or alternatively, analysis results may be transmitted to the external device.

In an embodiment, the output comprises a wireless module for wirelessly transmitting signals to said external device. This allows the network tapto wirelessly connect to the external device.

In an embodiment, the first network connector comprises a first ethernet physical transceiver and, optionally, the second network connector comprises a second ethernet physical transceiver. The ethernet physical transceiver, also referred to as Ethernet PHY in the art, may be understood to be a component that operates at the physical layer of the OSI network model. Optionally, the ethernet physical transceiver implements the Ethernet physical layer portion of the 1 000BASE-T and/or 1 00BASE-TX, and/or 1 0BASE-T standards.

The physical ethernet transceiver may be configured to convert a line modulated signal received over a wired connection with a network device to a digital signal.

In an embodiment the first and second signals are optical signals. In such embodiment, the first network connector comprises a first optical module for converting the first optical signal from the first network device into a first electrical signal and, optionally, the second network connector comprises a second optical module for converting the second optical signal from the second network device into a second electrical signal. This embodiment enables to capture data packets in an optical fiber network.

In an embodiment, the signals received from the first and, optionally second, network device convey serial data representing data packets. In such embodiment, the hardware implemented logic comprises a first serial-to-parallel convertor for deserializing the first serial data and, optionally, a second serial-to-parallel convertor for deserializing the second serial data.

In an embodiment, the signals received from the first and, optionally second, network device represent encoded data, optionally encoded serial data. In such embodiment, the hardware implemented logic comprises a physical coding sublayer (PCS) that is configured to decode the encoded data.

In an embodiment, the hardware implemented logic is configured to determine meta-information associated with a data packet and provide the meta-information to the analysis component. The meta-information is indicative of at least one of
- a time instance when the data packet was received at the network tap,
- an original data packet length,
- a truncated data packet length,
- a parsed protocol stack,
- a stateless flow hash, which may be based on packet 5-tuples.

In an example, the hardware implemented logic is configured to add a capture header and/or a capture trail to a data packet before providing the data packet to the analysis component. The capture header and/or trail may comprise meta-information associated with the packet.

In an embodiment, the hardware implemented logic comprises a fail-safe circuit that is configured to electrically connect the first and second network connector if the hardware implemented logic and/or the analysis component malfunctions. This embodiment enables the network traffic between the first and second network device to be maintained in case of malfunction of the network tap.

In an embodiment, the hardware implemented logic comprises a unidirectional data bus. Then, the hardware implemented logic is configured such that the determined data packets pass through the unidirectional data bus. This embodiment further safeguards that no information can flow from the analysis component to the network traffic capture component, in particular to the first and second network connectors.

A data bus may be said to be unidirectional if it is for example controlled by a controller that is configured to control the data flow on the bus such that data packets only flow in one direction.

The data packets may be provided to the data bus in the order in which they were received at the network connectors. The data bus may be a physical data bus.

In an embodiment, the network tap, e.g. the hardware implemented logic, and the analysis component are connected to each other by means of a unidirectional bus, such as a unidirectional universal serial bus (USB). This embodiment further safeguards that no information can flow from the analysis component to the network traffic capture component, in particular to the first and second network connectors. A universal serial bus is typically controlled by a USB driver and/or by a peripheral controller. Preferably, neither of these is configured to control the operation of the universal serial bus such that it can accommodate injection of data packets from the analysis component 4.

In an embodiment, the network tap, e.g. the hardware implemented logic, and the analysis component are connected to each other by means of a Peripheral Component Interconnect (PCI) bus and/or a Peripheral Component Interconnect Express (PCIe) bus. Again, preferably, such a PCI and/or PCIe bus is unidirectional.

In an embodiment, the computer readable instructions, when executed by the processor, cause the processor to select the first data packet stored in the computer readable storage media out of a plurality of stored data packets and transmit the first data packet to an external device.

This embodiment is advantageous in that not all captured data packets are transmitted to the external device, which would requires substantial resources, such as bandwidth.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the existing network traffic monitoring device or be stored upon manufacturing of such device.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 illustrates a network tap according to an embodiment;
FIG. 2 illustrate a network tap according a preprocessing component and an output, according to an embodiment;
FIG. 3 illustrates a network tap according to an embodiment in more detail;
FIG. 4 illustrates functional blocks comprises in hardware implemented logic according to an embodiment;
FIG. 5 illustrates an analysis component according to an embodiment.

### DETAILED DESCRIPTION OF THE DRAWINGS

In the figures, identical reference numerals indicate identical, or similar, elements.

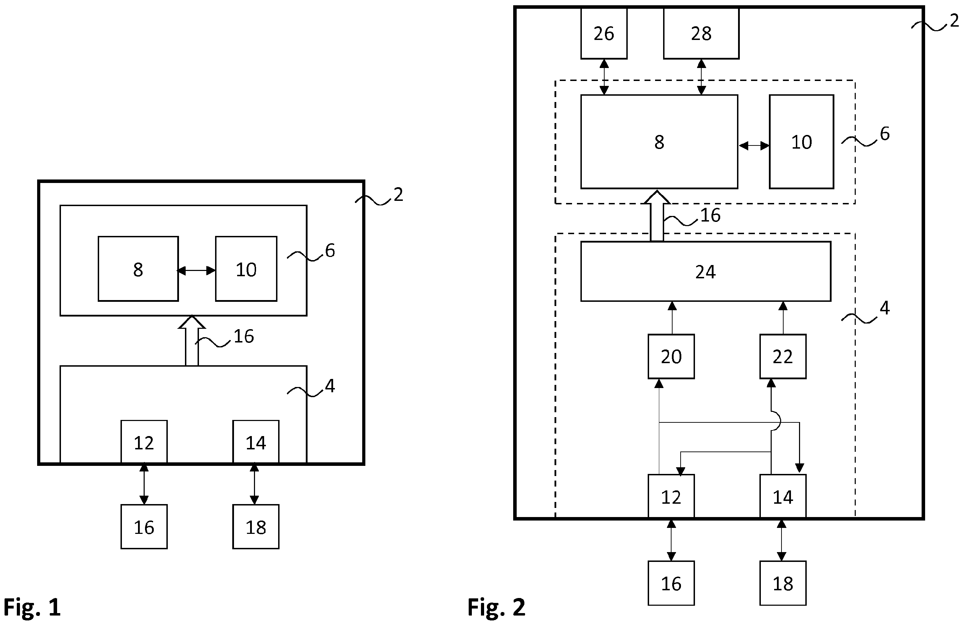

Figure 1 shows a network tap 2 according to an embodiment. In this embodiment, the device 2 comprises a network traffic capture component 4 and an analysis component 6. The traffic capture component 4 comprises a first network connector 12 that is configured to receive a first signal from first network device 16. Network connectors described herein may be network ports, such as Ethernet ports, that are configured to receive cabling, such as Ethernet cables, for connecting to other network devices.

The network tap 2 shown in figure 1 also comprises a second network connector 14 for connecting to a second network device 18. The network tap may namely be used to monitor traffic that is seen on a span port of a switch circuit. For this purpose a single network connector may be sufficient.

Each network connector 12, 14 may be connected by means of a full duplex connection to a network device 16, 18. Thus, each network connector 12, 14 may comprise a receiver unit for receiving the signals from a network device and a transmitter unit for transmitting signals to a network device.

When the first and second network devices are part of a packet switched network, such as the internet, then the signals that are received on the network connectors 12 and 14 represent data packets. Thus, at least part of a signal received from the first network device 16 represents such a data packet and at least part of a signal received from the second network device 18 represents such a data packet.

It should be appreciated that these data packets may be have been constructed in accordance with a specific protocol, such as the Ethernet protocol IEEE 802.3:2018. Network connector 12 may comprise a first ethernet physical transceiver and, optionally, the second network connector comprises a second ethernet physical transceiver.

The network traffic capture component 4 comprises hardware implemented logic configured to determine data packets based on the signals received from the first network device 16 and second network 18 and to provide these determined first data packet to the analysis component.

The network tap 2 further comprises an analysis component, which may be understood to be an integrated analysis component in the sense that the traffic network monitoring device is embodied as a single unit, for example as a single box, that contains both the network traffic capture component 4 and the analysis component 6. This advantageously allows to analyze the network traffic by simply connecting it to the first and/or second network device. No additional network connector is required for connecting to an external monitoring device.

The analysis component 6 can further perform packet, flow, protocol and application analysis. It may be configured to
- collect statistics on packet level (packet size distribution, bandwidth utilization)
- correlate packet in flow based common metrics (IP addresses, protocol, ports)
- provide network performances analytics by collecting and measuring flow based metrics, such as latency, packet loss, retransmissions, et cetera,
- do network troubleshooting, such as detect misconfiguration, defect, abuse,
- recognize a layer 7 application,
- provide application performances analytics (application latency).

The analysis component 6 may comprise one or more computer readable storage media 10, such as a solid state drive (SSD). These storage media may be suitable for storing any kind of information, including one or more computer programs. A computer program may be understood to comprise a plurality of computer-readable instructions that can be executed by a processor 8, such as a microprocessor, of the analysis component. Such computer readable instructions may, when executed by the processor 8, cause the processor 8 to store the first and/or second data packet in the one or more computer readable storage media for analysis.

In an embodiment, the network traffic capture component 4, e.g. the hardware implemented logic of the network traffic capture component 4, and the analysis component 6 are connected to each other by means of a unidirectional bus 16, such as a universal serial bus (USB), which may prevent any information to travel from the analysis component 6 to the network traffic capture component 4.

Figure 2 shows in more detail an embodiment of the network tap 2. The network traffic capture component 4, in particular the hardware implemented logic, comprises a first medium access control component 20 and a second medium access control component 22. The first medium access control component 20 receives the data packets that are received at network connector 12 and the second medium access control component 22 receives the data packets that are received at the network connector 14. The medium access control components forward the data packets to the analysis component 6.

The arrows from network connector 12 to network connector 14 and vice versa indicate that the hardware implemented logic is configured to provide the data packets received at connector 12 to connector 14, and vice versa.

The hardware implemented logic may comprise a scrambler component that is configured to decode the digitalized signal as output by the ethernet physical transceivers 12 and 14. The scrambler component may then provide the decoded signals to the medium access control components 20 and 22. The scrambler component may be understood to determine the data packets that are represented by signals received at the network connectors 12 and 14.

In the depicted example, the network traffic capture component 4, in particular the hardware implemented logic of the network traffic capture component 4, comprises a preprocessing component 24 that is configured to preprocess the data packets before providing them to the analysis component 6. Preprocessing a data packet may comprise determining meta-information associated with the data packet and optionally adding the meta-information in a header and/or trail of the data packet.

The network tap 2 may comprise an output that is configured to transmit signals representing information stored in the one or more computer readable storage media 10 to an external device (not shown). The embodiment of figure 2 comprises two such outputs 28, 26. A first output 26 may be a network connector for physically connecting the network tap2 to an external device. Output 26 may be an ethernet port. The second output 28 comprises a wireless module 28 so that the network traffic monitoring device 2 can wirelessly communicate with an external device.

The computer readable instructions stored in the one or more storage media 10 may for example, when executed, cause the processor 8 to select out of a plurality of data packets that have been captured and subsequently been stored in the one or more computer readable storage media 10, one or more data packets and transmit the selected data packet to an external device.

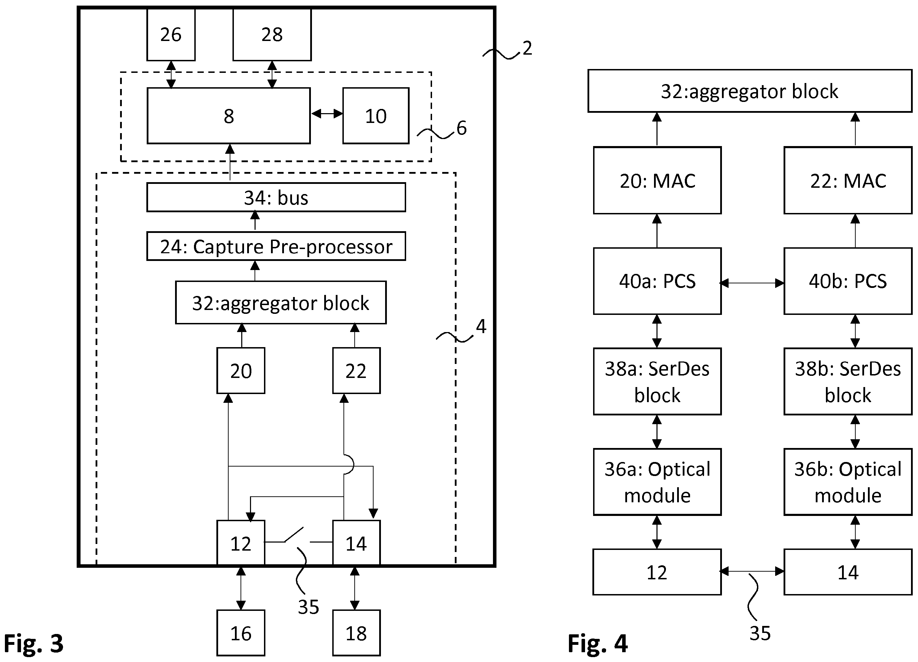

Figure 3 shows in more detail an embodiment of the network tap 2. In this embodiment, the traffic capture component 4, in particular the hardware implemented logic of the traffic capture component 4, comprises an aggregator block 32. This aggregator block receives the captured data packets from the medium access control components 20 and 22. These components may be configured to add a timestamp to each received data packet.

The aggregator may provide the data packets received from the medium access control components 20, 22 to the preprocessor 24, which may determine further meta-information for each data packet as described herein. The aggregator outputs the data packets to the preprocessor 24 in accordance with the respective timestamps of the data packets. Thus, when the aggregator receives a first data packet from component 20 at a first time instance and a second data packet, e.g. from the second component 22, thereafter, then the aggregator block 32 will first provide the first data packet to the preprocessor 24 before providing the second data packet to the preprocessor 24.

The preprocessor 24 then feeds the data packets to a bus 34, such as a physical bus. In particular, the preprocessor may feed the data packets to a controller of the bus 34, such as a USB peripheral controller and/or a PCIe controller. It should be appreciated that such a controller can be implemented in the hardware-implemented logic and/or as an external component, external to the network traffic capture component and external to the analysis component.

The above described timestamp is an example of meta-information determined by the hardware implemented logic of the network traffic capture component 4, in particular by the medium access control components 20, 22. In order to be able to add the timestamp, the hardware-implemented logic may comprise a free running time counter. The time counter may be synchronized to a standard time, such as UTC or to a system time of the analysis component, for example the system time used by the processor of the analysis component. The analysis component, in particular its processor, may be synchronized to LAN/Internet by a Network Time Protocol (NTP) and/or a Precision Time Protocol (PTP). Additionally or alternatively, the free running time counter may be synchronized via a GPS receiver. Additionally or alternatively, the free running time counter may be synchronized based on an external 1 PPS (1 pulse per second) signal. The purpose of the synchronization is to avoid natural time counter drifting or precisely synchronize multiple devices.

The hardware implemented logic may thus be configured to determine meta-information associated with a data packet and provide the meta-information to the analysis component 4. The meta-information may be indicative of at least one of
- a time instance when the data packet was received at the network tap,
- an original data packet length,
- a truncated data packet length,
- a parsed protocol stack,
- a stateless flow hash, which may be based on packet 5-tuples.

The hardware implemented logic may namely be configured to truncate a data packet before providing it to the analysis component 6. As a result of this truncation, the length of the data packet changes, from the original data packet length, to a truncated data packet length.

In the embodiment of figure 3, the hardware implemented logic comprises a fail-safe circuit 35 that is configured to electrically connect the first and second network connector if the hardware implemented logic and/or the analysis component malfunctions. An example of a malfunction would be that the network traffic monitoring device 2 no longer receives power so that it cannot function properly and/or that an internal component of the hardware implemented logic fails.

Figure shows some functional blocks that may be present in the hardware implemented logic when the signals received at the first network connector 12 and, optionally, at the second network connector 14, are optical signals. These optical signals may be received via an optical fiber cable from a network device. Such an optical fiber cable may comprise at least one optical guide for transmitting signals from the network device to the network connector and at least one other optical guide for receiving optical signals at the network connector form the network device. In such case, the hardware implemented logic of the network traffic capture component 4 may comprise an optical module 36a for converting the optical signal into an electrical signal. This electrical signal may then be provided to a SerDes block 38a comprised in the hardware implemented logic, which SerDes block 38a is configured to deserialize the electrical signals. A SerDes block 38a may further be configured to digitalize the signal, extract the clock from the signal and extracts bit values. Digitalizing a signal as used herein may be understood to be converting the signal into a digital form that can be processed by the hardware-implemented logic. In an example, digitalizing a signal comprises quantizing the signal which may be understood to be rounding sampled values of the signal to respective fixed, distinct values, such as bit values. The deserialized electrical signals may subsequently be provided to a physical coding sublayer (PCS) 40 comprised in the hardware implemented logic, which PCS 40a is configured to decode the electrical signal. The electrical signal may have been encoded, for example at the first network device, using a 64b/66b encoding scheme, or an 8b/10b encoding scheme. 64b/66b encoding is typically used for 1 0Gbit/s ethernet, while the 8b/10b encoding scheme is typically used for 1 Gbit/s ethernet. Such encoding schemes are known in the art and are beneficial for clock recovery purposes.

The PCS 40a may be configured to, after decoding the electrical signal, determine the data packets from the decoded signal and provide them to the medium access control component 20. However, the PCS 40 may also be configured to provide the determined data packet to another PCS 40b, that subsequently encodes the data packet again. PCS 40b may provide the encoded data packet to a SerDes block 38b, that serializes the data. The serialized data, an electrical signal, may then be provided to optical module 36b that converts the electrical signal into an optical signal again. Of course, the same operations may be performed in the other direction (from second network device to first network device) as indicated by the double arrows. In this manner, data packets are copied by the hardware implemented logic and provided to both the analysis component 6 and to the other network connector so that data packets travel unaltered between the two network devices.

The embodiment of figure 4 shows that the network tap 2 can also comprise a fail safe circuit 35 if the received signals form the network devices are optical signals. In such case, the fail safe circuit 35 comprises one or more optical relay switches that are configured to guide the received optical signals directly from connector 12 to connector 14 and vice versa. Then, no conversion of the optical signals to electrical signals occurs.

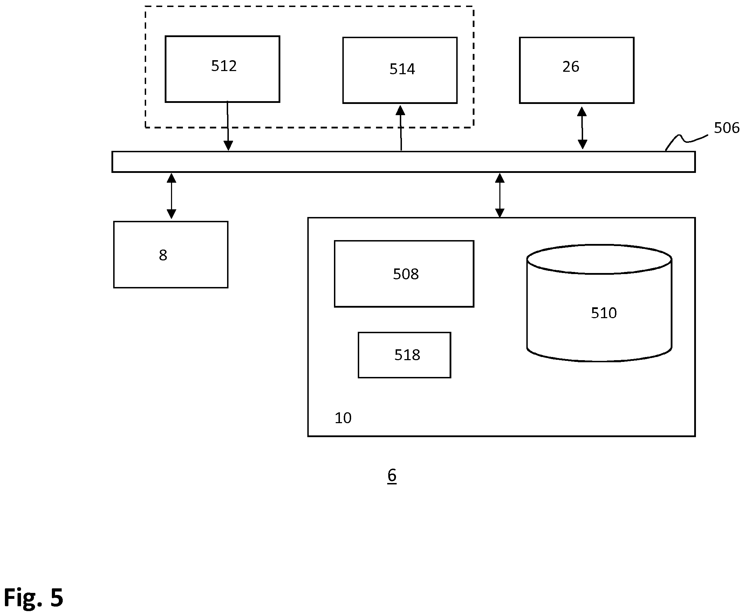

Fig. 5 depicts a block diagram illustrating an exemplary analysis component according to an embodiment.

As shown in Fig. 5, the analysis component 6 may include at least one processor 8 coupled to memory elements 10 through a system bus 506. As such, the analysis component may store program code within memory elements 10. Further, the processor 8 may execute the program code accessed from the memory elements 10 via a system bus 506. In one aspect, the analysis component may be implemented as a computer that is suitable for storing and/or executing program code. It should be appreciated, however, that the analysis component 6 may be implemented in the form of any system including a processor and a memory that is capable of performing the functions described within this specification.

The memory elements 10 may include one or more physical memory components such as, for example, local memory 508 and one or more bulk storage components 510. The local memory may refer to random access memory or other non-persistent memory component(s) generally used during actual execution of the program code. A bulk storage component may be implemented as a hard drive or other persistent data storage component. The processing system 6 may also include one or more cache memories (not shown) that provide temporary storage of at least some program code in order to reduce the number of times program code must be retrieved from the bulk storage component 510 during execution.

Input/output (I/O) components depicted as an input component 512 and an output component 514 optionally can be coupled to the analysis component. Examples of input components may include, but are not limited to, a keyboard, a pointing component such as a mouse, or hardware implemented logic as described herein or the like. Examples of output components may include, but are not limited to, a monitor or a display, speakers, or a wireless module as described herein, or the like. Input and/or output components may be coupled to the analysis component either directly or through intervening I/O controllers.

In an embodiment, the input and the output components may be implemented as a combined input/output component (illustrated in Fig. 5 with a dashed line surrounding the input component 512 and the output component 514). An example of such a combined component is a touch sensitive display, also sometimes referred to as a "touch screen display" or simply "touch screen". In such an embodiment, input to the component may be provided by a movement of a physical object, such as e.g. a stylus or a finger of a user, on or near the touch screen display.

A network adapter 26 may also be coupled to the analysis component to enable it to become coupled to other systems, computer systems, remote network components, and/or remote storage components through intervening private or public networks. The network adapter may comprise a data receiver for receiving data that is transmitted by said systems, devices and/or networks to the analysis component 6, and a data transmitter for transmitting data from the analysis component 6 to said systems, devices and/or networks. Modems, cable modems, and Ethernet cards are examples of different types of network adapter that may be used with the analysis component 6.

As pictured in Fig. 5, the memory elements 10 may store an application 518. In various embodiments, the application 518 may be stored in the local memory 508, the one or more bulk storage components 510, or apart from the local memory and the bulk storage components. It should be appreciated that the analysis component 6 may further execute an operating system (not shown in Fig. 5) that can facilitate execution of the application 518. The application 518, being implemented in the form of executable program code, can be executed by the analysis component 6, e.g., by the processor 8. Responsive to executing the application, the analysis component 6 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory components within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 8 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The description of embodiments of the present invention has been presented for purposes of illustration, but is not intended to be exhaustive or limited to the implementations in the form disclosed. Many modifications and variations will be apparent to those of ordinary skill in the art without departing from the scope as defined by the claims.

## Claims

1. A network tap (2) configured to capture data packets travelling from a first network device to a second network device as well as data packets travelling from the second network device to the first network device, the network tap comprising
an analysis component (6) for analyzing one or more data packets, and
a network traffic capture component (4) comprising a first network connector (12) for receiving a first signal from the first network device (16), wherein at least part of the first signal represents a first data packet, wherein the network traffic capture component (4) comprises
hardware implemented logic configured to determine the first data packet based on the received first signal and provide a first copy of the determined first data packet to the analysis component (6) for analysis, the network tap (2) further comprising
a second network connector (14) for receiving a second signal from the second network device (18), and wherein at least part of the second signal represents a second data packet, wherein the hardware implemented logic is configured to determine the second data packet based on the second signal received by the second network connector (14) from the second network device (18) and provide a first copy of the determined second data packet to the analysis component (6) for analysis, wherein the hardware implemented logic is further configured to
provide a second copy of the determined first data packet to the second network connector (14) for transmission to the second network device, the second network connector (14) being configured to transmit the second copy of the first data packet to the second network device (18), and wherein the hardware implemented logic is configured to
provide a second copy of the determined second data packet to the first network connector (12) for transmission to the first network device, the first network connector (12) being configured to transmit the second copy of the second data packet to the first network device (16).

2. The network tap (2) according to claim 1, wherein
the analysis component (6) comprises one or more computer readable storage media for storing computer readable instructions, the analysis component (6) further comprising a processor (8) coupled to the one or more computer readable storage media (10), wherein
the computer readable instructions, when executed by the processor (8), cause the processor to store the first copy of the first data packet in the one or more computer readable storage media (10) for analysis.

3. The network tap (2) according to one or more of the preceding claims, further comprising
an output (26, 28) coupled to the analysis component (6), the output (26, 28) being configured to transmit signals representing information stored in the one or more computer readable storage media to an external device.

4. The network tap (2) according to the preceding claim, wherein the output (28) comprises a wireless module for wirelessly transmitting signals to said external device.

5. The network tap (2) according to one or more of the preceding claims, wherein the first network connector (12) comprises a first ethernet physical transceiver.

6. The network tap (2) according to one or more of the preceding claims, wherein the first signal is an optical signal, wherein
the first network connector (12) comprises a first optical module (36) for converting the first optical signal from the first network device (16) into a first electrical signal .

7. The network tap (2) according to the preceding claim, wherein said electrical signals convey serial data representing data packets, wherein
the hardware implemented logic comprises a first serial-to-parallel convertor (38) for deserializing the first serial data.

8. The network tap (2) according to claim 6 or 7, wherein said electrical signals represent encoded data, and wherein
the hardware implemented logic comprises a physical coding sublayer (40) that is configured to decode the encoded data.

9. The network tap (2) according to one or more of the preceding claims, wherein the hardware implemented logic is configured to determine meta-information associated with one data packet and provide the meta-information to the analysis component (6), the meta-information being indicative of a time instance when the data packet was received at the network tap (2).

10. The network tap (2) according to one or more of the preceding claims, wherein the hardware implemented logic comprises a fail-safe circuit (35) that is configured to electrically connect the first (12) and second network connector (14) if the hardware implemented logic and/or the analysis component (6) malfunctions.

11. The network tap (2) according to one or more of the preceding claims, wherein the hardware implemented logic comprises a unidirectional data bus (16), and wherein the hardware implemented logic is configured such that the determined data packets pass through the unidirectional data bus.

12. The network tap (2) according to one or more of the preceding claims, wherein the network traffic capture component (4), e.g. the hardware implemented logic, and the analysis component (6) are connected to each other by means of a unidirectional bus (16).

13. The network tap (2) according to one or more of the preceding claims, wherein the network traffic capture component (4), e.g. the hardware implemented logic, and the analysis component (6) are connected to each other by means of a Peripheral Component Interconnect bus and/or a Peripheral Component Interconnect Express bus.

14. The network tap (2) according to one or more of the preceding claims, wherein the computer readable instructions, when executed by the processor, cause the processor to
select the first data packet stored in the computer readable storage media out of a plurality of stored data packets and transmit the first data packet to an external device.

## Patentansprüche

1. Netzwerk-Testzugangspunkt (2), der konfiguriert ist, um Datenpakete, die von einer ersten Netzwerkvorrichtung zu einer zweiten Netzwerkvorrichtung laufen, ebenso wie Datenpakete, die von der zweiten Netzwerkvorrichtung zu der ersten Netzwerkvorrichtung laufen, zu erfassen, wobei der Netzwerk-Testzugangspunkt aufweist:
eine Analysekomponente (6) zum Analysieren eines oder mehrerer Datenpakete, und
eine Netzwerkverkehrserfassungskomponente (4), die einen ersten Netzwerkanschluss (12) zum Empfangen eines ersten Signals von der ersten Netzwerkvorrichtung (16) aufweist, wobei wenigstens ein Teil des ersten Signals ein erstes Datenpaket darstellt, wobei die Netzwerkverkehrserfassungskomponente (4) Hardware-implementierte Logik aufweist, die konfiguriert ist, um das erste Datenpaket basierend auf dem empfangenen ersten Signal zu bestimmen und eine erste Kopie des bestimmten ersten Datenpakets an die Analysekomponente (6) zur Analyse bereitzustellen, wobei der Netzwerk-Testzugangspunkt (2) ferner aufweist:
einen zweiten Netzwerkanschluss (14) zum Empfangen eines zweiten Signals von der zweiten Netzwerkvorrichtung (18), und wobei wenigstens ein Teil des zweiten Signals ein zweites Datenpaket darstellt, wobei die Hardware-implementierte Logik konfiguriert ist, um das zweite Datenpaket basierend auf dem zweiten Signal, das durch den zweiten Netzwerkanschluss (14) von der zweiten Netzwerkvorrichtung (18) empfangen wird, zu bestimmen und eine erste Kopie des bestimmten zweiten Datenpakets an die Analysekomponente (6) zur Analyse bereitzustellen, wobei die Hardware-implementierte Logik konfiguriert ist, um
eine zweite Kopie des bestimmten ersten Datenpakets an den zweiten Netzwerkanschluss (14) für die Übertragung an die zweite Netzwerkvorrichtung bereitzustellen, wobei der zweite Netzwerkanschluss (14) konfiguriert ist, um die zweite Kopie des ersten Datenpakets an die zweite Netzwerkvorrichtung (18) zu übertragen, und wobei die Hardware-implementierte Logik konfiguriert ist, um
eine zweite Kopie des bestimmten zweiten Datenpakets an den ersten Netzwerkanschluss (12) für die Übertragung an die erste Netzwerkvorrichtung bereitzustellen, wobei der erste Netzwerkanschluss (12) konfiguriert ist, um die zweite Kopie des zweiten Datenpakets an die erste Netzwerkvorrichtung (16) zu übertragen.

2. Netzwerk-Testzugangspunkt (2) nach Anspruch 1, wobei
die Analysekomponente (6) ein oder mehrere computerlesbare Speichermedien zum Speichern computerlesbarer Anweisungen aufweist, wobei die Analysekomponente (6) ferner einen Prozessor (8) aufweist, der mit dem einen oder den mehreren computerlesbaren Speichermedien (10) gekoppelt ist, wobei
die computerlesbaren Anweisungen, wenn sie von dem Prozessor (8) ausgeführt werden, bewirken, dass der Prozessor die erste Kopie des ersten Datenpakets zur Analyse in dem einen oder den mehreren computerlesbaren Speichermedien (10) speichert.

3. Netzwerk-Testzugangspunkt (2) nach einem oder mehreren der vorhergehenden Ansprüche, der ferner aufweist:
einen Ausgang (26, 28), der mit der Analysekomponente (6) gekoppelt ist, wobei der Ausgang (26, 28) konfiguriert ist, um Signale, die Informationen darstellen, die in dem einen oder den mehreren computerlesbaren Speichermedien gespeichert sind, an eine externe Vorrichtung zu übertragen.

4. Netzwerk-Testzugangspunkt (2) nach dem vorhergehenden Anspruch, wobei der Ausgang (28) ein drahtloses Modul zum drahtlosen Übertragen von Signalen an die externe Vorrichtung aufweist.

5. Netzwerk-Testzugangspunkt (2) nach einem oder mehreren der vorhergehenden Ansprüche, wobei der erste Netzwerkanschluss (12) einen ersten physischen Ethernet-Transceiver aufweist.

6. Netzwerk-Testzugangspunkt (2) nach einem oder mehreren der vorhergehenden Ansprüche, wobei das erste Signal ein optisches Signal ist, wobei
der erste Netzwerkanschluss (12) ein erstes optisches Modul (36) zum Umwandeln des ersten optischen Signals von der ersten Netzwerkvorrichtung (16) in ein erstes elektrisches Signal aufweist.

7. Netzwerk-Testzugangspunkt (2) nach dem vorhergehenden Anspruch, wobei die elektrischen Signale serielle Daten, die Datenpakete darstellen, transportieren, wobei
die Hardware-implementierte Logik einen ersten Seriell-Parallel-Wandler (38) zum Deserialisieren der ersten seriellen Daten aufweist.

8. Netzwerk-Testzugangspunkt (2) nach Anspruch 6 oder 7, wobei die elektrischen Signale kodierte Daten darstellen, und wobei
die Hardware-implementierte Logik eine physischen Kodierungs-Teilschicht (40) aufweist, die konfiguriert ist, um die kodierten Daten zu dekodieren.

9. Netzwerk-Testzugangspunkt (2) nach einem oder mehreren der vorhergehenden Ansprüche, wobei die Hardware-implementierte Logik konfiguriert ist, um zu einem Datenpaket gehörende Metainformationen zu bestimmen und die Metainformationen an die Analysekomponente (6) bereitzustellen, wobei die Metainformationen einen Zeitpunkt anzeigen, zu dem das Datenpaket an dem Netzwerk-Testzugangspunkt (2) empfangen wurde.

10. Netzwerk-Testzugangspunkt (2) nach einem oder mehreren der vorhergehenden Ansprüche, wobei die Hardware-implementierte Logik eine ausfallsichere Schaltung (35) aufweist, die konfiguriert ist, um den ersten (12) und den zweiten Netzwerkanschluss (14) elektrisch zu verbinden, wenn die Hardware-implementierte Logik und/oder die Analysekomponente (6) ausfällt.

11. Netzwerk-Testzugangspunkt (2) nach einem oder mehreren der vorhergehenden Ansprüche, wobei die Hardware-implementierte Logik einen unidirektionalen Datenbus (16) aufweist, und wobei die Hardware-implementierte Logik derart konfiguriert ist, dass die bestimmten Datenpakete durch den unidirektionalen Datenbus gehen.

12. Netzwerk-Testzugangspunkt (2) nach einem oder mehreren der vorhergehenden Ansprüche, wobei die Netzwerkverkehrserfassungskomponente (4), z.B. die Hardware-implementierte Logik, und die Analysekomponente (6) mittels eines unidirektionalen Busses (16) miteinander verbunden sind.

13. Netzwerk-Testzugangspunkt (2) nach einem oder mehreren der vorhergehenden Ansprüche, wobei die Netzwerkverkehrserfassungskomponente (4), z.B. die Hardware-implementierte Logik, und die Analysekomponente (6) mittels eines PCI-, Peripheral Component Interconnect, Busses und/oder eines PCI-Expressbusses miteinander verbunden sind.

14. Netzwerk-Testzugangspunkt (2) nach einem oder mehreren der vorhergehenden Ansprüche, wobei die computerlesbaren Anweisungen, wenn sie von dem Prozessor ausgeführt werden, bewirken, dass der Prozessor:
das in den computerlesbaren Speichermedien gespeicherte erste Datenpaket aus einer Vielzahl gespeicherter Datenpakete auswählt und das erste Datenpaket an eine externe Vorrichtung überträgt.

## Revendications

1. Tap de réseau (2) configurée pour capturer des paquets de données se déplaçant d'un premier dispositif de réseau à un deuxième dispositif de réseau ainsi que des paquets de données se déplaçant du deuxième dispositif de réseau au premier dispositif de réseau, la tap de réseau comprenant
un élément d'analyse (6) pour analyser un ou plusieurs paquets de données, et
un élément de capture de trafic de réseau (4) comprenant un premier connecteur de réseau (12) pour recevoir un premier signal à partir du premier dispositif de réseau (16), dans laquelle au moins une partie du premier signal représente un premier paquet de données, dans laquelle l'élément de capture de trafic de réseau (4) comprend une logique à mise en oeuvre par matériel configurée pour déterminer le premier paquet de données sur la base du premier signal reçu et fournir une première copie du premier paquet de données déterminé à l'élément d'analyse (6) pour une analyse, la tap de réseau (2) comprenant en outre
un deuxième connecteur de réseau (14) pour recevoir un deuxième signal à partir du deuxième dispositif de réseau (18), et dans laquelle au moins une partie du deuxième signal représente un deuxième paquet de données, dans laquelle la logique à mise en oeuvre par matériel est configurée pour déterminer le deuxième paquet de données sur la base du deuxième signal reçu par le deuxième connecteur de réseau (14) à partir du deuxième dispositif de réseau (18) et fournir une première copie du deuxième paquet de données déterminé à l'élément d'analyse (6) pour une analyse, dans laquelle la logique à mise en oeuvre par matériel est en outre configurée pour fournir une deuxième copie du premier paquet de données déterminé au deuxième connecteur de réseau (14) pour une transmission au deuxième dispositif de réseau, le deuxième connecteur de réseau (14) étant configuré pour transmettre la deuxième copie du premier paquet de données au deuxième dispositif de réseau (18), et dans laquelle la logique à mise en oeuvre par matériel est configurée pour
fournir une deuxième copie du deuxième paquet de données déterminé au premier connecteur de réseau (12) pour une transmission au premier dispositif de réseau, le premier connecteur de réseau (12) étant configuré pour transmettre la deuxième copie du deuxième paquet de données au premier dispositif de réseau (16).

2. Tap de réseau (2) selon la revendication 1, dans laquelle
l'élément d'analyse (6) comprend un ou plusieurs supports de stockage lisibles par ordinateur pour stocker des instructions lisibles par ordinateur, l'élément d'analyse (6) comprenant en outre un processeur (8) couplé aux un ou plusieurs supports de stockage lisibles par ordinateur (10), dans laquelle
les instructions lisibles par ordinateur, lorsqu'elles sont exécutées par le processeur (8), amènent le processeur à stocker la première copie du premier paquet de données dans les un ou plusieurs supports de stockage lisibles par ordinateur (10) pour une analyse.

3. Tap de réseau (2) selon une ou plusieurs des revendications précédentes, comprenant en outre une sortie (26, 28) couplée à l'élément d'analyse (6), la sortie (26, 28) étant configurée pour transmettre des signaux représentant des informations stockées dans les un ou plusieurs supports de stockage lisibles par ordinateur à un dispositif externe.

4. Tap de réseau (2) selon la revendication précédente, dans laquelle la sortie (28) comprend un module sans fil pour transmettre sans fil des signaux audit dispositif externe.

5. Tap de réseau (2) selon une ou plusieurs des revendications précédentes, dans laquelle le premier connecteur de réseau (12) comprend un premier émetteur-récepteur physique Ethernet.

6. Tap de réseau (2) selon une ou plusieurs des revendications précédentes, dans laquelle le premier signal est un signal optique, dans laquelle le premier connecteur de réseau (12) comprend un premier module optique (36) pour convertir le premier signal optique en provenance du premier dispositif de réseau (16) en un premier signal électrique.

7. Tap de réseau (2) selon la revendication précédente, dans laquelle lesdits signaux électriques transportent des données sérielles représentant des paquets de données, dans laquelle
la logique à mise en oeuvre par matériel comprend un premier convertisseur série-parallèle (38) pour désérialiser les premières données sérielles.

8. Tap de réseau (2) selon la revendication 6 ou 7, dans laquelle lesdits signaux électriques représentent des données codées, et dans laquelle
la logique à mise en oeuvre par matériel comprend une sous-couche de codage physique (40) qui est configurée pour décoder les données codées.

9. Tap de réseau (2) selon une ou plusieurs des revendications précédentes, dans laquelle la logique à mise en oeuvre par matériel est configurée pour déterminer des méta-informations associées à un paquet de données et fournir les méta-informations à l'élément d'analyse (6), les méta-informations indiquant une instance temporelle où le paquet de données a été reçu au niveau de la tap de réseau (2).

10. Tap de réseau (2) selon une ou plusieurs des revendications précédentes, dans laquelle la logique à mise en oeuvre par matériel comprend un circuit à tolérance de pannes (35) qui est configuré pour connecter électriquement le premier connecteur de réseau (12) et le deuxième connecteur de réseau (14) si la logique à mise en oeuvre par matériel et/ou l'élément d'analyse (6) fonctionnent mal.

11. Tap de réseau (2) selon une ou plusieurs des revendications précédentes, dans laquelle la logique à mise en oeuvre par matériel comprend un bus (16) de données unidirectionnel, et dans laquelle la logique à mise en oeuvre par matériel est configurée de sorte que les paquets de données déterminés passent par le bus de données unidirectionnel.

12. Tap de réseau (2) selon une ou plusieurs des revendications précédentes, dans laquelle l'élément de capture de trafic de réseau (4), par exemple la logique à mise en oeuvre par matériel, et l'élément d'analyse (6) sont connectés l'un à l'autre au moyen d'un bus (16) unidirectionnel.

13. Tap de réseau (2) selon une ou plusieurs des revendications précédentes, dans laquelle l'élément de capture de trafic de réseau (4), par exemple la logique à mise en oeuvre par matériel, et l'élément d'analyse (6) sont connectés l'un à l'autre au moyen d'un bus Peripheral Component Interconnect et/ou d'un bus Peripheral Component Interconnect Express.

14. Tap de réseau (2) selon une ou plusieurs des revendications précédentes, dans laquelle les instructions lisibles par ordinateur, lorsqu'elles sont exécutées par le processeur, amènent le processeur à sélectionner le premier paquet de données stocké dans les supports de stockage lisibles par ordinateur parmi une pluralité de paquets de données stockés et transmettre le premier paquet de données à un dispositif externe.
